Europäisches Patentamt

European Patent Office

Office européen des brevets

(11) Publication number: **0 105 374**
**B1**

# EUROPEAN PATENT SPECIFICATION

(45) Date of publication of patent specification: **19.04.89**

(51) Int. Cl.⁴: **G 11 B 7/24**

(21) Application number: **83900571.7**

(22) Date of filing: **03.02.83**

(86) International application number:
**PCT/JP83/00029**

(87) International publication number:
**WO 83/02845 18.08.83 Gazette 83/19**

(54) **OPTICAL RECORDING/REPRODUCTION DISC.**

(30) Priority: **05.02.82 JP 17807/82**
**10.02.82 JP 20020/82**

(43) Date of publication of application:
**18.04.84 Bulletin 84/16**

(45) Publication of the grant of the patent:
**19.04.89 Bulletin 89/16**

(84) Designated Contracting States:
**DE FR GB**

(56) References cited:
**DE-B-2 624 380**
**JP-A-53 061 303**
**JP-B-51 037 485**
**JP-U-55 028 226**
**JP-U-55 028 227**

**PATENTS ABSTRACTS OF JAPAN, vol. 7, no.**
**18 (P-170)1163r, 25 January 1983; & JP - A - 57**
**172 542 (TOKYO SHIBAURA DENKI K.K.) 23-10-**
**1982**

(73) Proprietor: **Matsushita Electric Industrial Co.,**
**Ltd.**
**1006, Oaza Kadoma**
**Kadoma-shi Osaka-fu, 571 (JP)**

(72) Inventor: **INOUE, Takao**
**28-7, Yamadaike Higashimachi, Hirakata-shi**
**Osaka-fu 573-01 (JP)**
Inventor: **MAEDA, Yukio**
**44-30, Himurodai 1-chome, Hirakata-shi**
**Osaka-fu 573-01 (JP)**
Inventor: **UCHIDA, Masami**
**35-10, Ominemotomachi 2-chome, Hirakata-shi**
**Osaka-fu 573-01 (JP)**

(74) Representative: **Crawford, Andrew Birkby et al**
**A.A. THORNTON & CO. Northumberland House**
**303-306 High Holborn**
**London WC1V 7LE (GB)**

Courier Press, Leamington Spa, England.

**Description**

Technical field

This invention relates to an optical recording/reproducing disc, and more particularly to an optical recording/reproducing disc hard to injure, which is provided at the outer peripheral surface with a disc protecting layer to thereby protect a recording/reproducing region necessary for signals.

Background art

Conventionally, the optical recording disc has usually formed at a round plastic plate a recording layer capable of optically recording/reproducing and thereafter another plastic plate at need is laid on the recording layer for protecting it. The protective plastic plate for the recording layer, however, has a problem in that the recording disc, when placed on a flat surface, is injured at the surface of disc by contact with dust or foreign objects during the manufacturing, which has been problematical also in the optical recording/reproducing disc using the laser beam. In other words, a problem has been created in that the flaw on the protective plate will appear as noise in recording and/or reproducing signals.

It is known to protect a recording disc by providing thickened rim portions in order to space the record portion of the disc from a support surface during use. US—A—2631859 discloses such a disc, being a phonograph record formed as an integral plastics member.

It is also known from DE—A—264380 to provide thickened rim portions for video discs for the purpose of providing an air cushion in a similar manner to floppy discs under high rotational speeds. US—A—3430966 discloses an optical recording disc having a thickened rim portion apparently for strengthening purposes. Providing a protective spin coating layer on a recording member is known from JP—A—53-61303.

It is an object of the present invention to provide an optical reproducing/recording disc having peripheral projections, for protection from dust or foreign objects, which are formed by a cost-effective method which provides projections of accurately defined height to provide adequate protection and to take account of other practical considerations.

The present invention in one aspect provides an optcial recording/reproducing disc comprising: a center recording layer provided on a plastics plate capable of premitting optical recording and reproducing of signals, plastics plates fixed to opposite sides of said recording layer, characterized by each said plate having an outer peripheral surface chamfered radially inwardly in an outward axial direction from said recording layer, a protective coating of plastics material covering opposite outer surfaces of said plates, said chamfered peripheral surfaces thereof, and the outer peripheral surface of said recording layer, said protective coating being formed by spinning of said disc and including respective integral annular projections extending generally axially outwardly, to a height of between 10 μm to 200 μm, from said protective coating at respective sides of said disc at locations adjacent radially inner portions of respective said chamfered surfaces, said projections defining means to prevent damage to respective planar surfaces of said protective coating positioned radially inwardly of said projections and covering respective recording/reproducing portions of said recording layer.

In another aspect the invention provides a method of manufacturing an optical recording/reproducing disc, said method comprising fixing plastics plates to opposite sides of a recording layer capable of permitting optical recording and reproducing of signals, characterized by the steps of providing each said plate with an outer peripheral surface chamfered radially inwardly in an outward axial direction from said recording layer, applying a solution of plastics material over opposite outer surfaces of said plates, said chamfered peripheral surfaces thereof, and the outer peripheral surface of said recording layer by a spin coating operation involving rotating said disc about the axis thereof, by said spin coating operation forming from said solution respective integral annular projections extending axially outwardly, to a height of between 10 μm to 200 μm, from respective sides of said disc at locations adjacent radially inner portions of respective said chamfered surfaces, and while rotating said disc about said axis causing said solution to set, thereby forming a protective coating having extending axially therefrom said annular projections.

Thus in accordance with the invention projections of accurately defined height may be produced automatically during the spin coating operation, the height being determined by the chamfers.

Brief description of the drawing

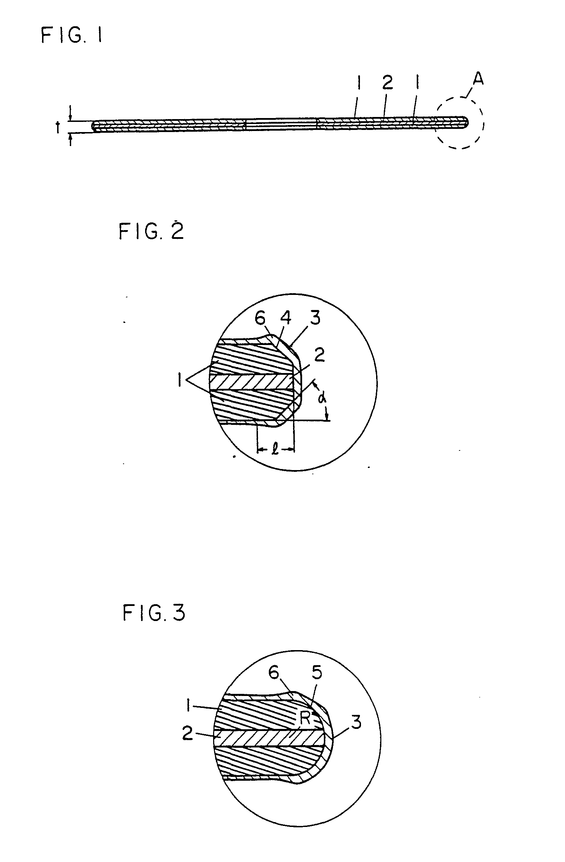

Fig. 1 is a sectional side view of an embodiment of an optical recording/reproducing disc of the invention, and Figs. 2, 3 and 4 are partially sectional views of outer peripheral end portions of the Fig. 1 embodiment and modified embodiments of the invention.

Best mode for carrying out the invention

The optical recording/reproducing disc base member of the invention, as shown in Fig. 1, mainly comprises three layers. Namely, a recording layer 2 necessary for optical recording and/or reproducing is interposed between two plastic plates 1 of acrylic resin each having a center bore and a diameter of 210 mm. In further detail, the recording layer 2 utilizes the principle that irradiation of the laser beam causes the phase transition to change reflectivity of the layer.

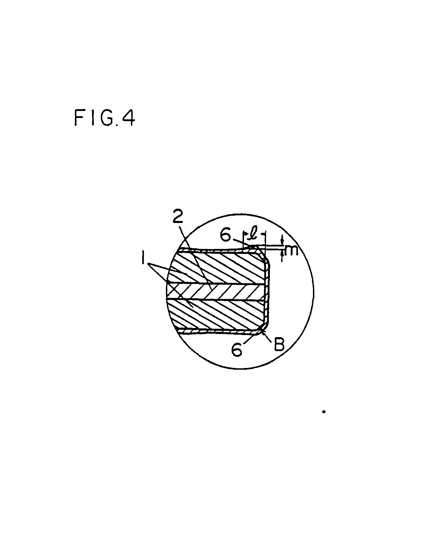

Figs. 2 and 3 are partially enlarged sectional views of a portion designated by A in Fig. 1, and each shows the disc in Fig. 1 coated with a protective layer 3. The disc in Fig. 2 is chamfered 4 at the corners of the outer peripheral end portion of disc and that in Fig. 3 is rounded-chamfered at the same portion, a projection 6 being provided at the outermost periphery of disc. In Fig. 4, the projection 6 at the protective layer 3 provided at the outermost peripheral end of disc comprising the plastic plates 1 and recording layer 2, is preferable to have a height m as large as possible, but when too larger, increases an area of projection 6 and a width l to have a poor appearance, whereby the projection 6 is preferable to be about 20 μ or less in height from the viewpoint of the positional relation with the laser head. While, the height of 10μ or less has not been so effective in prevention of flaw caused by dust or the like. The embodiment in Fig. 4 has been obtained by the following coating that a coating liquid was filled in a dip tank and the resin disc was applied simultaneously at both the surfaces with the coating material while rotating through a rotary shaft of disc, thereby simultaneously forming the protective layer 3 and projection 6.

The coating apparatus and method used for the embodiment were in service in a constant condition of the number of rotations in dipping: 50 rpm, that of spinner rotations: 2000 rpm, and that during the irradiation of the ultraviolet rays: 750 rpm.

In addition, the material for coating comprises 100 parts by weight of a composition consisting of 40 parts by weight of dipentaerythritol - hexacrylate, 10 parts by weight of epoxyacrylate, 60 parts by weight of trimethylol - propanetriacrylate, and 10 parts by weight of hydroxyethylmethacrylate, and added with 3 parts by weight of benzoinisobutyl ether, which composition is mixed with isopropyl alcohol and methyl isobutyl ketone into a solvent of viscosity of 16 cps (at 25°C).

After experiments under the above condition and with an angle α of chamfer and radius R of roundness of chamfer, the results in Tables 1 and 2 were obtained.

When the angle α was larger than 60°, a width l of a thick portion of film was larger, and in a case of no chamfering, width l over 1 cm appeared. Hence, the angle α of chamfer is preferable to be 60° or less, further preferably 5° to 45°. The angle of 5°, not to say absolutely from the relation to the recording region, should be an angle not reaching the recording layer. Also, in Fig. 2, the chamfered portion may be round.

In Fig. 3, the end portion of the disc is chamfered semicircularly, in which a radius R is 1/2 to 4/5 times, preferably 1/2 to 3/5 times, as large as the disc thickness.

In Fig. 4, the angle of chamfer is changed from 10° to 80° and the coating solvent viscosity from 5 to 30 cps (by B type viscometer at 20°C), so that the disc was obtained which was of desired dimensions shown in Table 3.

The effect of preventing the flaw was discriminated in such a manner that on a given base, sand of particle size of 300 μm or less was scattered, on which the disc was reciprocated 10 times in its weight, so that the flaws on the disc were inspected by a depth gage and visual observation. The discrimination ranks are as follows (A, B and C practicable):

A; non flaw,
B: several slight flaws (not affecting signals),
C: several deep flaws (affecting signals according to the location of flaw),
D: innumerable slight flaws,
E: innumerable deep flaws, and
F: other defects (such as appearance).

TABLE 1

| | Angle α of chamfer | l(mm) | Percent defective in production of 50 discs |
|---|---|---|---|
| Comparison Example | 80 (degrees) | 1.5 | 4(%) |
| Embodiment 1 | 60 | 1.0 | 0 |
| Embodiment 2 | 45 | 0.7 | 0 |
| Embodiment 3 | 5 | 1.3 | 1 |
| Comparison example | 0 | 2.0 | 6 |

(Disc impossible of recording and reproducing signals at the outermost periphery was decided to be defective).

# EP 0 105 374 B1

TABLE 2

|  | Radius of round chamfer R=n×t | l(mm) | Percent defective in production of 50 discs (%) |
|---|---|---|---|
| Comparison example | n=0 | 2.0 | 6 |
| Embodiment 1 | n=4/5 | 1.0 | 0 |
| Embodiment 2 | n=3/5 | 0.5 | 0 |
| Embodiment 3 | n=1/2 | 0.5 | 0 |

(Disc Substrate: Acrylic plate of 210 in diameter).

(Disc impossible to record and reproduce signals at the outermost periphery was decided to be defective).

TABLE 3

| Item / Example | Shape (Dimension) | | Discrimination |
|---|---|---|---|
|  | m(μm) | l(mm) |  |
| Embodiment 1 | 5 | 2~3 | E: Innumerable flaws |
| Embodiment 2 | 10 | 1~2 | C: Several flaws |
| Embodiment 3 | 200 | 1 | C: Several flaws, slightly poor appearance |
| Embodiment 4 | 300 | 1~2 | F: Poor configuration of projection, poor appearance |
| Embodiment 5 | 20 | 1 | B: Several slight flaws |
| Embodiment 6 | 50 | 0.7 | A: Non flaw |
| Embodiment 7 | 100 | 0.9 | A: Non flaw |
| Comparison example | 0 | 0 | D: Innumerable slight flaws |

From the above results, the projection of 10 to 200 μ in height is provided at the outermost periphery of disc, thereby making it possible to provide a disc practical and hard to injure the recording and reproducing regions at the disc.

Industrial applicability

As seen from the above, the optical recording/reproducing disc of the invention, even when placed on the flat plane, is hard to injure, thanks to the projection formed of the protective layer at the outermost peripheral end of the disc, thereby being not only convenient to operate but also available for storing signals.

**Claims**

1. An optical recording/reproducing disc comprising:
a center recording layer provided on a plastics plate (2) capable of permitting optical recording and reproducing of signals, plastics plates (1) fixed to opposite sides of said recording layer, characterized by each said plate having an outer peripheral surface (4) chamfered radially inwardly in an outward axial direction from said recording layer, a protective coating (3) of plastics material covering opposite outer surfaces of said plates, said chamfered peripheral surfaces thereof, and the outer peripheral surface of said recording layer, said protective coating being formed by spinning of said disc and including respective

4

integral annular projections (6) extending generally axially outwardly, to a height of between 10 µm to 200 µm, from said protective coating at respective sides of said disc at locations adjacent radially inner portions of respective said chamfered surfaces, said projections defining means to prevent damage to respective planar surfaces of said protective coating positioned radially inwardly of said projections and covering respective recording/reproducing portions of said recording layer.

2. A disc as claimed in claim 1, wherein said chamfered surfaces (4) are part-conical and extend at an angle (α) of 5 to 60° to the plane of said disc.

3. A disc as claimed in claim 1, wherein said chamfered surfaces (5) are rounded at a radius of curvature (R) equal to 1/2 to 4/5 the thickness of said disc.

4. A method of manufacturing an optical recording/reproducing disc, said method comprising fixing plastics plates (1) to opposite sides (2) of a recording layer capable of permitting optical recording and reproducing of signals, characterized by the steps of providing each said plate with an outer peripheral surface (4) chamfered radially inwardly in an outward axial direction from said recording layer, applying a solution (3) of plastics material over opposite outer surfaces of said plates, said chamfered peripheral surfaces thereof, and the outer peripheral surface of said recording layer by a spin coating operation involving rotating said disc about the axis thereof, by said spin coating operation forming from said solution respective integral annular projections (6) extending axially outwardly, to a height of between 10 µm to 200 µm, from respective sides of said disc at locations adjacent radially inner portions of respective said chamfered surfaces, and while rotating said disc about said axis causing said solution to set, thereby forming a protective coating having extending axially therefrom said annular projections.

5. A method as claimed in claim 4, comprising forming said chamfered surfaces (4) as part-conical surfaces extending at an angle (α) of 5 to 60° to the plane of said disc.

6. A method as claimed in claim 4, comprising forming said chamfered surfaces (5) as rounded surfaces having a radius (R) of curvature equal to 1/2 to 4/5 the thickness of said disc.

## Patentansprüche

1. Optische Aufzeichnungs/Wiedergabeplatte mit auf einer Kunstoffscheibe (2) ausgebildeten inneren Aufzeichnungsschicht für die optische Aufzeichnung und Wiedergabe von Signalen und an gegenüberliegenden Seiten der Aufzeichnungsschicht angebrachten Kunststoffscheiben (1), dadurch gekennzeichnet, daß jede Scheibe eine in axialier Richtung von der Aufzeichnungsschicht weg radial einwärts abgeschrägte äußere Umfangsfläche (4) aufweist und daß die gegenüberliegenden Oberflächen der Scheiben sowie deren abgeschrägte Umfangsflächen und die äußere Umfangsfläche der Aufzeichungsschicht mit einem Schutzüberzug (3) auf Kunststoff bedeckt sind, welcher unter Rotation der Platte hergestellt ist und damit einstückig ausgebildete ringförmige Erhebunden (6) aufweist, welche sich zunächst den radial inneren Bereichen der abgeschrägten Umfangsflächen an jeder Seite der Platte in Axialrichtung bis zu einer Höhe von 10 µm bis 200 µm über den Schutzüberzug erheben und jeweils eine Einrichtung für den Schutz der sich radial einwärts von ihnen erstreckenden ebenen Oberfläche des die Aufzeichnungs/Wiedergabebereich der Aufzeichnungsschicht bedeckenden Schutzüberzugs vor Beschädigungen bilden.

2. Platte nach Anspruch 1, bei welcher die abgeschrägten Flächen (4) konische Teilflächen sind und sich in einem Winkel (α) zwischen 5 und 60° zur Ebene der Platte erstrecken.

3. Platte nach Anspruch 1, bei welcher die abgeschrägten Flächen (5) mit einem 1/2 bis 4/5 der Dicke der Platte entsprechenden Krümungsradius (R) abgerundet sind.

4. Verfahren zum Herstellen einer optischen Aufzeichnungs/Wiedergabeplatte, bei welchem Kunststoffscheiben (1) an gegenüberliegenden Seiten einer für die optische Aufzeichnung und Wiedergabe von Signalen geeigneten Aufzeichnungsschicht (2) angebracht werden, dadurch gekennzeichnet, daß jede Scheibe mit einer in Axialrichtung von der Aufzeichnungsschicht weg radial einwärts abgeschrägten äußeren Umfangsfläche (4) versehen wird und daß eine Kunststofflösung (3) in einem Rotationsauftragsverfahren, bei welchem die Platte in Drehung um ihre Achse versetzt wird, auf die gegenüberliegenden Oberflächen der Platte, auf die abgeschrägten Umfangsflächen derselben und die äußere Umfangsfläche der Aufzeichnungsschicht aufgebracht wird, wobei während des Rotations - Austragsverfahrens aus der Lösung einstückige ringförmige Erhebungen gebildet werden, welche sich zunächst den radial inneren Bereichen der abgeschrägten Flächen an beiden Seiten der Platte in Axialrichtung derselben bis zu einer Höhe von 10 µm bis 200 µm erheben, und daß die Lösung zum Addinden gebracht wird, während die Drehung der Platte um ihre Achse aufrecht erhalten wird, so daß ein Schutzüberzug ausgebildet wird, über welchen sich die ringförmigen Erhebungen (6) in Axialrichtung erheben.

5. Verfahren nach Anspruch 4, bei welchem die abgeschrägten Flächen (4) als konische Teilflächen ausgebildet werden, welche sich in einem Winkel (α) von 5 bis 60° zur Ebene der Platte erstrecken.

6. Verfahren nach Anspruch 4, bei welchem die abgeschrägten Flächen (5) als gerundete Flächen ausgebildet werden, deren Krümmungsradius (R) gleich 1/2 bis 4/5 der Dicke der Platte ist.

## Revendications

1. Disque d'enregistrement-lecture optique, comprenant:
une couche centrale d'enregistrement formée sur une plaque (2) de matière plastique capable de permettre l'enregistrement et la lecture optique de signaux, des plaques (1) de matière plastique étant fixées sur les faces opposées de la couche d'enregistrement, caractérisé en ce que chaque plaque a une surface périphérique externe (4) chanfreinée radialement vers l'intérieur et axialement vers l'extérieur par rapport à la couche d'enregistrement, un revêtement protecteur (3) d'une matière plastique recouvrant les surfaces externes opposées des plaques, les surfaces périphériques chanfreinées et la surface périphérique externe de la couche d'enregistrement, le revêtement protecteur étant formé par entraînement en rotation du disque et comportant des saillies annulaires respectives solidaires (6) dépassant vers l'extérieur en direction générale axiale, avec une hauteur comprise entre 10 et 200 µm par rapport au revêtement protecteur, sur les faces respectives du disque, à des emplacements adjacents à des parties radialement internes par rapport aux surfaces chanfreinées respectives, les saillies constituant un dispositif empêchant la détérioration des surfaces planes respectives du revêtement protecteur placées radialement vers l'intérieur par rapport aux saillies et recouvrant des parties respectives d'enregistrement-lecture de la couche d'enregistrement.

2. Disque selon la revendication 1, dans lequel les surfaces chanfreinées (4) ont une forme tronconique et forment un angle (α) de 5 à 60° avec le plan du disque.

3. Disque selon la revendication 1, dans lequel les surfaces chanfreinées (5) sont arrondies avec un rayon de courbure (R) compris entre 0,5 et 0,8 fois l'épaisseur du disque.

4. Procédé de fabrication d'un disque d'entregistrement-lecture optique, le procédé comprenant la fixation de plaques (1) de matière plastique sur les faces opposées (2) d'une couche d'enregistrement permettant l'enregistrement et la lecture optique de signaux, caractérisé par les étapes suivantes: la formation, sur chaque plaque, d'une surface périphérique externe (4) chanfreinée radialement vers l'intérieur et axialement vers l'extérieur par rapport à la couche d'enregistrement, l'application d'une solution (3) d'une matière plastique sur les surfaces externes opposées des plaques, leurs surfaces périphériques chanfreinées et la surface périphérique externe de la couche d'enregistrement, par une opération de revêtement à la tournette comprenant l'entraînement en rotation du disque autour de son axe, la formation, par l'opération de revêtement à la tournette et à partir de ladite solution, de saillies annulaires respectives solidaires (6) dépassant axialement vers l'extérieur, sur une hauteur comprise entre 10 et 200 µm, des côtés respectifs du disque à des emplacements adjacents à des parties radialement internes des surfaces chanfreinées respectives, et le durcissement de la solution, pendant la rotation du disque autour dudit axe, si bien qu'un revêtement protecteur ayant des saillies annulaires qui en dépassent axialement est formé.

5. Procédé selon la revendication 4, comprenant la formation des surfaces chanfreinées (4) sous forme de surfaces tronconiques faisant un angle (α) de 5 à 60° avec le plan du disque.

6. Procédé selon la revendication 4, comprenant la formation des surfaces chanfreinées (5) sous forme de surfaces arrondies ayant un rayon de courbure (R) compris entre 0,5 et 0,8 fois l'épaisseur du disque.

FIG. 1

FIG. 2

FIG. 3

FIG.4